# EUROPEAN PATENT SPECIFICATION

(11) **EP 2 900 959 B1**
(45) Date of publication and mention of the grant of the patent: **01.05.2019**
(21) Application number: 13842614.3
(22) Date of filing: 05.03.2013
(51) Int. Cl.: F01D 17/10, F02K 3/075

(54) **BLEED DUCT FOR LAMINAR FAN DUCT FLOW**
AUSLASSKANAL FÜR LAMINARE BLÄSERKANALSTRÖMUNG
CONDUITE DE PURGE POUR ÉCOULEMENT DE CONDUITE DE SOUFFLANTE LAMINAIRE

(30) Priority: 26.09.2012 US 201261705718 P
(43) Date of publication of application: 05.08.2015
(60) Divisional application: 18206831.2
(73) Proprietor: United Technologies Corporation, Farmington, CT 06032 (US)
(72) Inventor: TURNER, Matthew, A., Wallingford, CT 06492 (US); SALAMON, Keith, T., Middletown, CT 06457 (US); FORD, Barry, M., Middletown, CT 06457 (US)
(74) Representative: Dehns
(86) International application number: PCT/US2013/029052
(87) International publication number: WO 2014/051673

(56) References cited:
- US-A- 5 059 093
- US-A- 5 119 625
- US-A- 5 261 228
- US-A- 5 845 482
- US-A1- 2003 034 066
- US-A1- 2007 137 175
- US-A1- 2008 080 967
- US-A1- 2010 199 633
- US-B2- 6 938 407

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Bypass airflow generated by the fan section flows through a bypass passage defined around the core engine. Bypass airflow provides a substantial portion of the overall propulsive thrust generated by the gas turbine engine. During operation, bleed air may be directed from the compressor section to improve efficiency. The bleed air is typically directed into the bypass passage to intermix with bypass airflow. Obstructions and disruptive airflows can disturb bypass airflow and effect propulsive efficiencies.

Turbine engine manufacturers continuously seek further improvements to engine performance including improvements to thermal, transfer and propulsive efficiencies.

A gas turbine engine having the features of the preamble of claim 1 is disclosed in US2007/137175 A1

### SUMMARY

From a first aspect, the invention provides a gas turbine engine as set forth in claim 1.

In an embodiment of the foregoing gas turbine engine, the plurality of airfoils are disposed at a chord angle of between about 40° and about 55° for directing bleed airflow into the bypass passage.

In a further embodiment of any of the foregoing gas turbine engines, the chord angle is between about 45° and about 50°.

In a further embodiment of any of the foregoing gas turbine engines, the plurality of airfoils are orientated transverse to the engine axis.

In a further embodiment of any of the foregoing gas turbine engines, the core engine includes a compressor section and the duct is disposed proximate the compressor section for exhausting bleed air flow into the bypass passage.

Although the different examples have the specific components shown in the illustrations, embodiments of this disclosure are not limited to those particular combinations. It is possible to use some of the components or features from one of the examples in combination with features or components from another one of the examples.

These and other features disclosed herein can be best understood from the following specification and drawings, the following of which is a brief description.

### DETAILED DESCRIPTION

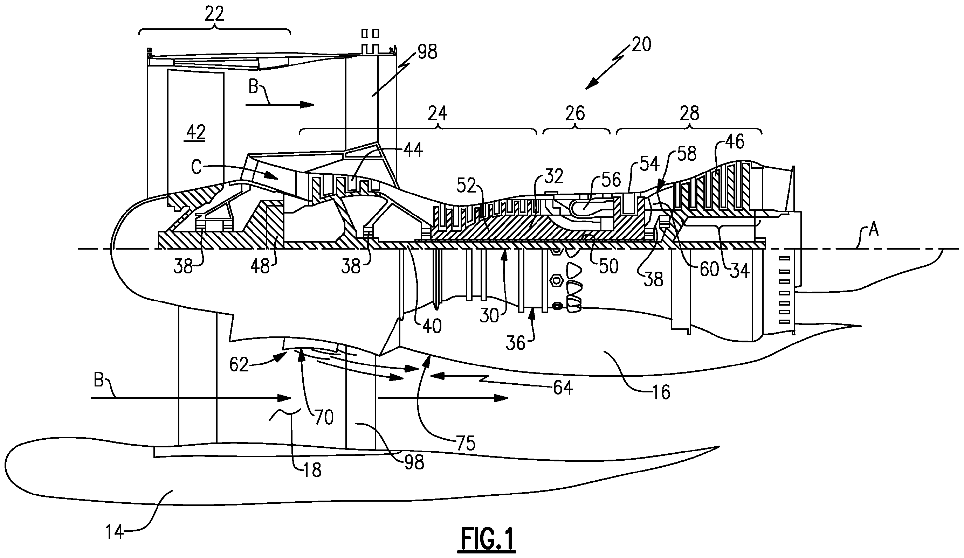

Figure 1 schematically illustrates an example gas turbine engine 20 that includes a fan section 22, a compressor section 24, a combustor section 26 and a turbine section 28. Alternative engines might include an augmenter section (not shown) among other systems or features. The fan section 22 drives air along a bypass flow path B while the compressor section 24 draws air in along a core flow path C where air is compressed and communicated to a combustor section 26. In the combustor section 26, air is mixed with fuel and ignited to generate a high pressure exhaust gas stream that expands through the turbine section 28 where energy is extracted and utilized to drive the fan section 22 and the compressor section 24.

Although the disclosed non-limiting embodiment depicts a turbofan gas turbine engine, it should be understood that the concepts described herein are not limited to use with turbofans as the teachings may be applied to other types of turbine engines; for example a turbine engine including a three-spool architecture in which three spools concentrically rotate about a common axis and where a low spool enables a low pressure turbine to drive a fan via a gearbox, an intermediate spool that enables an intermediate pressure turbine to drive a first compressor of the compressor section, and a high spool that enables a high pressure turbine to drive a high pressure compressor of the compressor section.

The example engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided.

The low speed spool 30 generally includes an inner shaft 40 that connects a fan 42 and a low pressure (or first) compressor section 44 to a low pressure (or first) turbine section 46. The inner shaft 40 drives the fan 42 through a speed change device, such as a geared architecture 48, to drive the fan 42 at a lower speed than the low speed spool 30. The high-speed spool 32 includes an outer shaft 50 that interconnects a high pressure (or second) compressor section 52 and a high pressure (or second) turbine section 54. The inner shaft 40 and the outer shaft 50 are concentric and rotate via the bearing systems 38 about the engine central longitudinal axis A.

A combustor 56 is arranged between the high pressure compressor 52 and the high pressure turbine 54. In one example, the high pressure turbine 54 includes at least two stages to provide a double stage high pressure turbine 54. In another example, the high pressure turbine 54 includes only a single stage. As used herein, a "high pressure" compressor or turbine experiences a higher pressure than a corresponding "low pressure" compressor or turbine.

The example low pressure turbine 46 has a pressure ratio that is greater than about 5. The pressure ratio of the example low pressure turbine 46 is measured prior to an inlet of the low pressure turbine 46 as related to the pressure measured at the outlet of the low pressure turbine 46 prior to an exhaust nozzle.

A mid-turbine frame 58 of the engine static structure 36 is arranged generally between the high pressure turbine 54 and the low pressure turbine 46. The mid-turbine frame 58 further supports bearing systems 38 in the turbine section 28 as well as setting airflow entering the low pressure turbine 46.

Airflow through the core airflow path C is compressed by the low pressure compressor 44 then by the high pressure compressor 52 mixed with fuel and ignited in the combustor 56 to produce high speed exhaust gases that are then expanded through the high pressure turbine 54 and low pressure turbine 46. The mid-turbine frame 58 includes vanes 60, which are in the core airflow path and function as an inlet guide vane for the low pressure turbine 46. Utilizing the vane 60 of the mid-turbine frame 58 as the inlet guide vane for low pressure turbine 46 decreases the length of the low pressure turbine 46 without increasing the axial length of the mid-turbine frame 58. Reducing or eliminating the number of vanes in the low pressure turbine 46 shortens the axial length of the turbine section 28. Thus, the compactness of the gas turbine engine 20 is increased and a higher power density may be achieved.

The disclosed gas turbine engine 20 in one example is a high-bypass geared aircraft engine. In a further example, the gas turbine engine 20 includes a bypass ratio greater than about six (6), with an example embodiment being greater than about ten (10). The example geared architecture 48 is an epicyclical gear train, such as a planetary gear system, star gear system or other known gear system, with a gear reduction ratio of greater than about 2.3.

In one disclosed embodiment, the gas turbine engine 20 includes a bypass ratio greater than about ten (10:1) and the fan diameter is significantly larger than an outer diameter of the low pressure compressor 44. It should be understood, however, that the above parameters are only exemplary of one embodiment of a gas turbine engine including a geared architecture and that the present disclosure is applicable to other gas turbine engines.

A significant amount of thrust is provided by the bypass flow B due to the high bypass ratio. The fan section 22 of the engine 20 is designed for a particular flight condition -- typically cruise at about 0.8 Mach and about 35,000 feet (10,668 m). The flight condition of 0.8 Mach and 35,000 ft. (10,668 m), with the engine at its best fuel consumption - also known as "bucket cruise Thrust Specific Fuel Consumption ('TSFC')" - is the industry standard parameter of pound-mass (lbm) of fuel per hour being burned divided by pound-force (lbf) of thrust the engine produces at that minimum point.

"Low fan pressure ratio" is the pressure ratio across the fan blade alone, without a Fan Exit Guide Vane ("FEGV") system. The low fan pressure ratio as disclosed herein according to one non-limiting embodiment is less than about 1.50. In another non-limiting embodiment the low fan pressure ratio is less than about 1.45.

"Low corrected fan tip speed" is the actual fan tip speed in ft/sec divided by an industry standard temperature correction of [(Tram °R)/(518.7°R)]^{0.5}. The "Low corrected fan tip speed", as disclosed herein according to one non-limiting embodiment, is less than about 1150 ft/second (350.5 m/s).

The example gas turbine engine includes the fan 42 that comprises in one non-limiting embodiment less than about 26 fan blades. In another non-limiting embodiment, the fan section 22 includes less than about 20 fan blades. Moreover, in one disclosed embodiment the low pressure turbine 46 includes no more than about 6 turbine rotors schematically indicated at 34. In another non-limiting example embodiment the low pressure turbine 46 includes about 3 turbine rotors. A ratio between the number of fan blades 42 and the number of low pressure turbine rotors is between about 3.3 and about 8.6. The example low pressure turbine 46 provides the driving power to rotate the fan section 22 and therefore the relationship between the number of turbine rotors 34 in the low pressure turbine 46 and the number of blades 42 in the fan section 22 disclose an example gas turbine engine 20 with increased power transfer efficiency.

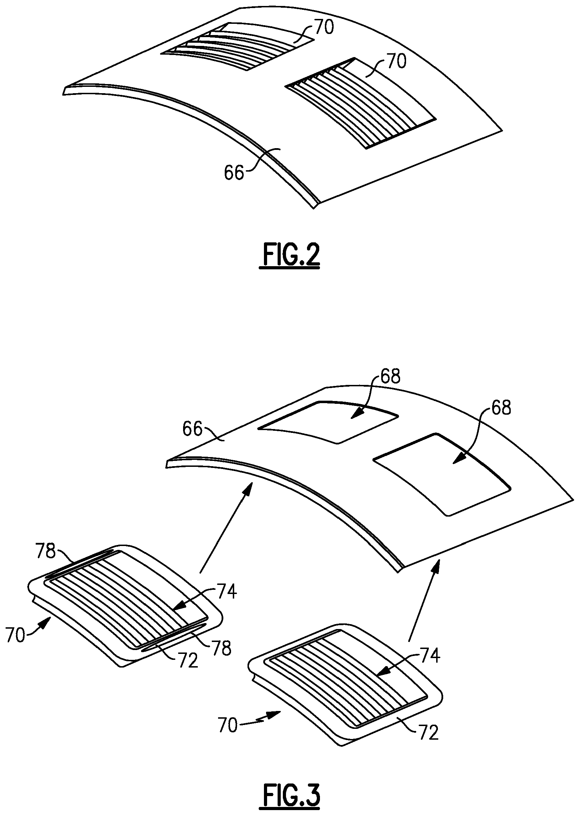

Referring to Figure 2, with continued reference to Figure 1, a bypass passage 18 is defined between a core nacelle 16 and an outer or fan nacelle 14. Fan exit guide vanes 98 orientate airflow through the bypass passage 18 to improve propulsive efficiencies. The core nacelle 18 includes a plurality of panels 66 (Figure 2). The panels 66 include ducts 70 that define openings 62 for bleed airflow 64 from the compressor section 24 into the bypass passage 18.

The disclosed ducts 70 include features for directing bypass airflow 64 into the bypass passage 18 that reduces disruptions in the bypass airflow B. The example duct 70 is mounted within panels proximate to the low pressure compressor 44, but may also be placed in other locations within the bypass flow passage where airflow is exhausted into the bypass flow B.

The duct 70 is provided in panels spaced circumferentially about the engine axis. In this example eight inserts are provided in four different panels 66. However, other numbers of ducts 70 could be utilized and are within the contemplation of this disclosure. Moreover, in the disclosed example, each of the ducts 70 is disposed within a common plane normal to the engine axis A.

Bypass airflow B through the bypass passage 18 provides a substantial portion of the overall propulsive forces generated by the engine 20. The core nacelle 16 includes an inner surface 75 that extends from just aft of the fan blades 42, to the aft portion of the engine 20. The panels 66 define a forward portion of the core nacelle 16 and in this example cover an engine compartment containing the low pressure compressor 44. Bleed air 64 from the low pressure compressor 44 is in some instances exhausted into the bypass flow B to improve compressor efficiency.

Referring to Figures 2 and 3, the example panel 66 supports two ducts 70. The example ducts 70 include a plurality of airfoils 74 that direct bleed air flow 64 into the bypass passage 18. A frame 72 defines an outer boundary of the duct 70 and supports the airfoils 74. The example louver assembly 70 is secured to the panel 66 using an adhesive material such as scrim supported epoxy 78. It should be understood that although the disclosed panels 66 are supported by an adhesive, other attachment processes are also within the contemplation of this disclosure.

The duct 70 is fabricated from a plastic material. In this example the duct 70 is fabricated from a polyethermide 30% glass filled. It should be appreciated that the duct 70 could be fabricated from other materials that are compatible with the environment within which it is desired to operate.

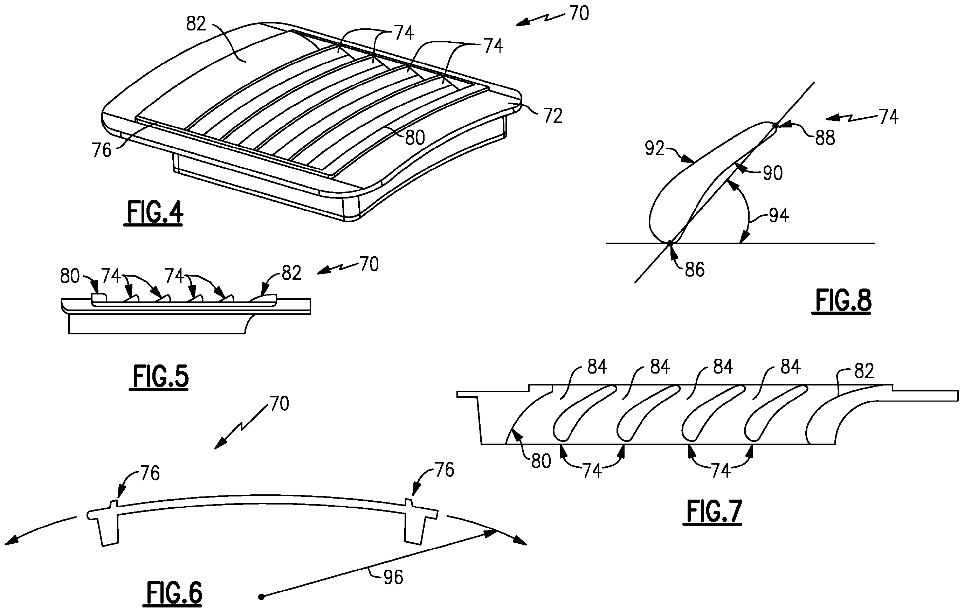

Referring to Figures 4-8, the example duct 70 includes a plurality of airfoils 74 supported within the frame 72. The ducts include a forward side 80 and an aft side 82 referenced relative to the orientation of duct 70 when mounted within the panel 66.

The airfoils 74 define passages 84 for the bleed airflow 64 into the bypass passage 18. The airfoils 74 include a pressure side 90, a suction side 92, a leading edge 86 and a trailing edge 88. A pressure side 90 of one airfoil 74 defines one side of the passage 84 and a suction side 92 of an adjacent airfoil defines a second side of the passage 84. The forward side 80 includes a shape similar to the pressure side 90 of the airfoils such that the passage 84 at the front side 80 is substantially the same as passages 84 defined between adjacent airfoils 74. Moreover, the aft side 82 includes a shape that is substantially the same shape as the suction side 92 of the airfoils to provide the aft most passage 84 with the same profile as those passages 84 between adjacent airfoils 74.

The duct 70 includes edges 76 that fit within the inner side of the openings 68 defined within the panels 66 (Figure 3). The edges 76 orientate and align the duct 70 and thereby the airfoils 70 within the panel 66 that provides for alignment of the bleed airflow 64 into the bypass passage 18. The duct 70 includes a curvature 96 that corresponds with a shape of the panels 66 to provide a desired fit. The matching curvature 96 provides a tight fit between the panel and duct 70 such that bleed air flow 64 is only directed through the passages 84 defined between the airfoils 74.

The airfoils 74 include a chord angle 94 of between about 40° and about 55° for directing bleed airflow into the bypass passage. In another disclosed example, the chord angle 94 is between about 45° and about 50°. The disclosed chord angle 94 defines the direction of bleed airflow 64 into the bypass passage 18 to minimize disruption to the bypass flow B.

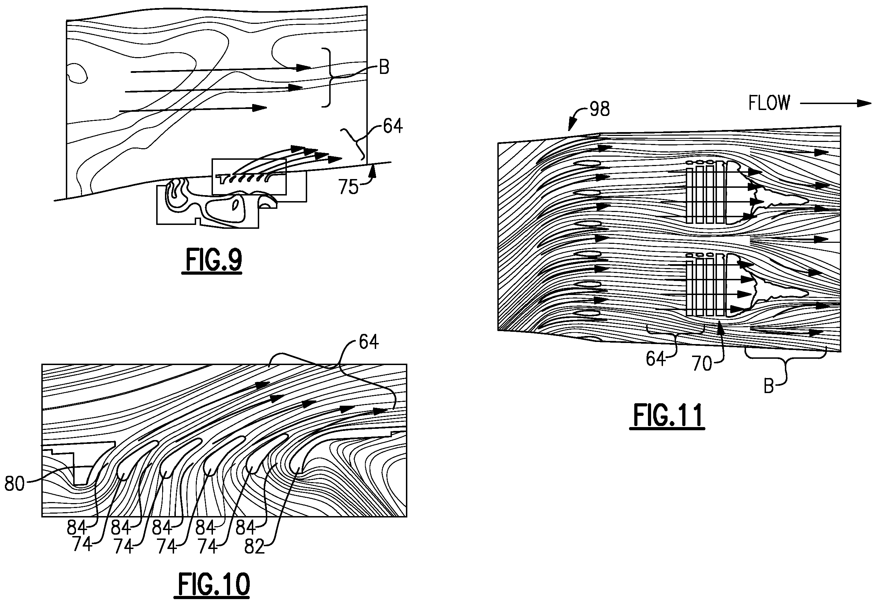

Referring to Figures 9, 10 and 11, an interaction between the bypass flow B and bleed airflow 64 is schematically shown. The airfoils 74 direct airflow 64 such that it lays down along the inner surface 75 of the core nacelle 16 instead of flowing perpendicular to the bypass flow B. Laying down, or directing the bleed airflow transverse to the duct 70 with the airfoils 74 reduces disruptions. Guide vanes 98 direct airflow toward the ducts 70 into the bypass flow B.

Accordingly, the example duct 70 minimizes flow disturbances in the bypass passage 18 and reduces the acoustic impact of the bleed air and minimizes flow pressure losses from within the bypass passage 18 caused by bleed air.

Although an example embodiment has been disclosed, a worker of ordinary skill in this art would recognize that certain modifications would come within the scope of this disclosure.

## Claims

1. A gas turbine engine (20) comprising:
a fan (22) including a plurality of fan blades (42) rotatable about an engine axis;
a core engine disposed within a core nacelle (16) for driving the fan (22);
a fan nacelle (14) circumscribing the fan (22);
a bypass passage (18) defined between the core nacelle (16) and the fan nacelle (14); and
a duct (70) mounted within the core nacelle (16) defining a bleed air flow path for directing bleed air from the core engine into the bypass passage (18), wherein the duct (70) includes a plurality of airfoils (74) that define a corresponding plurality of passages (84) through the core nacelle (16) bounded on one side by a suction side (92) of one airfoil (74) and a pressure side (90) of an adjacent airfoil (70),
wherein the duct (70) includes a forward side (80) and an aft side (82) wherein each of the forward side (80) and the aft side (82) include a partial airfoil shape corresponding to the shape of the plurality of airfoils (74); **characterised in that**
the core nacelle (16) comprises at least one panel (66) defining a plurality of openings (68) and the duct (70) comprises a plurality of ducts (70) corresponding to the plurality of openings (68).

2. The gas turbine engine as recited in claim 1, wherein the plurality of airfoils (74) are disposed at a chord angle of between about 40° and about 55° for directing bleed airflow into the bypass passage (18).

3. The gas turbine engine as recited in claim 2, wherein the chord angle is between about 45° and about 50°.

4. The gas turbine engine as recited in any preceding claim, wherein the plurality of airfoils (74) are orientated transverse to the engine axis.

5. The gas turbine engine as recited in any preceding claim, wherein the core engine includes a compressor section (24) and the duct (70) is disposed proximate the compressor section (24) for exhausting bleed air flow into the bypass passage (18).

## Patentansprüche

1. Gasturbinentriebwerk (20), umfassend:
einen Bläser (22), der eine Vielzahl von Bläserschaufeln (42) beinhaltet, die sich um eine Triebwerksachse drehen können;
ein Kerntriebwerk, das innerhalb einer Kerngondel (16) angeordnet ist, zum Antreiben des Bläsers (22);
eine Bläsergondel (14), die den Bläser (22) umgibt;
einen Umgehungsdurchgang (18), der zwischen der Kerngondel (16) und der Bläsergondel (14) definiert ist; und
einen Kanal (70), der in der Kerngondel (16) montiert ist und einen Auslassluftströmungsweg zum Lenken von Auslassluft aus dem Kerntriebwerk in den Umgehungsdurchgang (18) definiert, wobei der Kanal (70) eine Vielzahl von Turbinenschaufeln (74) beinhaltet, die eine entsprechende Vielzahl von Durchgängen (84) durch die Kerngondel (16) definiert, die an einer Seite durch eine Ansaugseite (92) einer Turbinenschaufel (74) und eine Druckseite (90) einer benachbarten Turbinenschaufel (70) begrenzt sind,
wobei der Kanal (70) eine vordere Seite (80) und eine hintere Seite (82) beinhaltet, wobei die vordere Seite (80) und die hintere Seite (82) jeweils eine Teilturbinenschaufelform beinhalten, die der Form der Vielzahl von Turbinenschaufeln (74) entspricht; **dadurch gekennzeichnet, dass**
die Kerngondel (16) mindestens eine Platte (66) umfasst, die eine Vielzahl von Öffnungen (68) definiert, und der Kanal (70) eine Vielzahl von Kanälen (70) umfasst, die der Vielzahl von Öffnungen (68) entspricht.

2. Gasturbinentriebwerk nach Anspruch 1, wobei die Vielzahl von Turbinenschaufeln (74) in einem Sehnenwinkel von etwa 40° bis etwa 55° angeordnet sind, um die Auslassluftströmung in den Umgehungsdurchgang (18) zu lenken.

3. Gasturbinentriebwerk nach Anspruch 2, wobei der Sehnenwinkel zwischen etwa 45° und etwa 50° liegt.

4. Gasturbinentriebwerk nach einem der vorhergehenden Ansprüche, wobei die Vielzahl von Turbinenschaufeln (74) quer zur Triebwerksachse ausgerichtet ist.

5. Gasturbinentriebwerk nach einem der vorhergehenden Ansprüche, wobei das Kerntriebwerk einen Verdichterabschnitt (24) beinhaltet und der Kanal (70) nahe dem Verdichterabschnitt (24) angeordnet ist, um die Auslassluftströmung in den Umgehungsdurchgang (18) abzulassen.

## Revendications

1. Moteur à turbine à gaz (20) comprenant :
une soufflante (22) incluant une pluralité de pales de soufflante (42) pouvant tourner autour d'un axe de moteur ;
un moteur central situé dans une nacelle centrale (16) pour entraîner la soufflante (22) ;
une nacelle de soufflante (14) circonscrivant la soufflante (22) ;
un passage de dérivation (18) défini entre la nacelle centrale (16) et la nacelle de soufflante (14) ; et
une conduite (70) montée dans la nacelle centrale (16) définissant un chemin d'un écoulement d'air de purge pour diriger de l'air de purge du moteur central dans le passage de dérivation (18), dans lequel la conduite (70) inclut une pluralité de profils aérodynamiques (74) qui définissent une pluralité correspondante de passages (84) à travers la nacelle centrale (16) délimités sur un côté par un côté d'aspiration (92) d'un profil aérodynamique (74) et un côté de pression (90) d'un profil aérodynamique adjacent (70),
dans lequel la conduite (70) inclut un côté avant (80) et un côté arrière (82) dans lequel chacun du côté avant (80) et du côté arrière (82) comprend une forme aérodynamique partielle correspondant à la forme de la pluralité de profils aérodynamiques (74) ; **caractérisé en ce que**
la nacelle centrale (16) comprend au moins un panneau (66) définissant une pluralité d'ouvertures (68) et la conduite (70) comprend une pluralité de conduites (70) correspondant à la pluralité d'ouvertures (68).

2. Moteur à turbine à gaz selon la revendication 1, dans lequel la pluralité de profils aérodynamiques (74) sont disposés à un angle de corde compris entre environ 40° et environ 55° pour diriger l'écoulement d'air de purge dans le passage de dérivation (18).

3. Moteur à turbine à gaz selon la revendication 2, dans lequel l'angle de corde est compris entre environ 45° et environ 50°.

4. Moteur à turbine à gaz selon une quelconque revendication précédente, dans lequel la pluralité de profils aérodynamiques (74) sont orientés transversalement à l'axe du moteur.

5. Moteur à turbine à gaz selon une quelconque revendication précédente, dans lequel le moteur central inclut une section compresseur (24) et la conduite (70) est disposée à proximité de la section compresseur (24) pour évacuer l'écoulement d'air de purge dans le passage de dérivation (18).
